Europäisches Patentamt

European Patent Office

Office européen des brevets

(11) Veröffentlichungsnummer: **0 017 018**
**B1**

(12) **EUROPÄISCHE PATENTSCHRIFT**

(45) Veröffentlichungstag der Patentschrift:
**19.10.83**

(21) Anmeldenummer: **80101228.7**

(22) Anmeldetag: **11.03.80**

(51) Int. Cl.³: **G 05 D 23/19, F 24 H 9/20,
G 05 D 16/20**

(54) **Temperaturregler.**

(30) Priorität: **15.03.79 DE 2910294**

(43) Veröffentlichungstag der Anmeldung:
**15.10.80 Patentblatt 80/21**

(45) Bekanntmachung des Hinweises auf die Patenterteilung:
**19.10.83 Patentblatt 83/42**

(84) Benannte Vertragsstaaten:
**AT BE CH FR GB IT LU NL SE**

(56) Entgegenhaltungen:
**EP-A-0 016 326
DE-A-2 307 109
DE-A-2 620 596
DE-B-1 550 293
DE-B-2 632 668**

(73) Patentinhaber: **Joh. Vaillant GmbH u. Co, Berghauser
Strasse 40 Postfach 10 10 20, D-5630 Remscheid 1 (DE)**
(84) Benannte Vertragsstaaten: **IT LU SE**

(73) Patentinhaber: **COFRABEL N.V., Goldenhopestraat 15,
B-1620 Drogenbos (BE)**
(84) Benannte Vertragsstaaten: **BE**

(73) Patentinhaber: **VAILLANT LIMITED, Heston Industrial
Estate Aerodrome Way, GB-Hounslow TW5 9PU Middx.
(GB)**
(84) Benannte Vertragsstaaten: **GB**

(73) Patentinhaber: **VAILLANT S.A.R.L, 4, Rue des Oliviers
Orly-Sénia 326, F-94537 Rungis Cedex (FR)**
(84) Benannte Vertragsstaaten: **FR**

(73) Patentinhaber: **SCHONEWELLE B.V., Ellermanstraat 17,
NL-1099 BX Amsterdam (NL)**
(84) Benannte Vertragsstaaten: **NL**

(73) Patentinhaber: **VAILLANT Ges.m.b.H,
Forchheimergasse 7 Postfach 56, A-1233 Wien (AT)**
(84) Benannte Vertragsstaaten: **AT**

(73) Patentinhaber: **Vaillant GmbH, Riedstrasse 8,
CH-8953 Dietikon 1 (CH)**
(84) Benannte Vertragsstaaten: **CH**

(72) Erfinder: **Ortlingshaus, Ulrich, Sternstrasse 22,
D-5630 Remscheid (DE)**

(74) Vertreter: **Heim, Johann-Ludwig, c/o Joh. Vaillant GmbH
u. Co Postfach 10 10 20 Berghauser Strasse 40,
D-5630 Remscheid 1 (DE)**

BUNDESDRUCKEREI BERLIN

## Temperaturregler

Die vorliegende Erfindung bezieht sich auf einen Temperaturregler, insbesondere für brennstoffbeheizte Wärmequellen, wie Durchlauf- oder Umlaufwassererhitzer, die mit Gas oder Öl gespeist sind, nach dem Oberbegriff des Anspruchs 1.

Aus der älteren europäischen Anmeldung 80 100 564.6, deren Inhalt gemäß Pat. 52(3) zum Stand der Technik gehört, ist ein Gasdruckregler für eine brennstoffbeheizte Wärmequelle bekanntgeworden, der aus einem Membranventil mit vorgeschaltetem Operator besteht. Als Operator wird hier ein Hilfsventil verstanden, das den Regelvorgang des Hauptventils einleitet bzw. beendet.

Aus der DE-A-2 307 109 ist ein Steuergerät für eine gas- oder ölbeheizte Wärmequelle bekanntgeworden, das mindestens zwei Temperatur-Istwert- und -Sollwertvergleichsstufen und einen mit einem Impulsgenerator versehenen Regelschaltkreis aufweist. Hierbei wird das Stellglied zur Zuführung des gasförmigen Brennstoffs zur Wärmequelle über den Impulsgenerator gesteuert.

Es besteht die Aufgabe, den eingangs erwähnten Druckregler aus der älteren Anmeldung in einen Temperaturregelkreis einzubeziehen, um die Vorlauftemperatur einer solchen Wärmequelle — oder bei direkter Bereitung warmen Gebrauchswassers die Zapfwassertemperatur — konstant zu halten, und zwar unter Unterdrückung einer zu kleinen Regelabweichung, sowie unter Begrenzung der maximalen Stellgröße.

Die Lösung dieser Aufgabe besteht in den kennzeichnenden Merkmalen des Anspruchs 1.

Der damit erreichbare technische Fortschritt ist darin zu sehen, daß eine Begrenzung der Ansteuerung des Druckreglers möglich ist, so daß bei einer zu kleinen Regelabweichung die Wärmequelle nicht unnötig in Funktion geht bzw. daß durch Begrenzen der maximalen Stellgröße eine Übersteuerung des Druckreglers nicht stattfinden kann und daß eine einstellbare Zündzeit zur optimalen Überzündung im Brenner möglich ist. Weiterhin kann Änderungen der Regelgröße schnell entgegengewirkt werden, indem das Verhalten des Reglers optimal angepaßt werden kann.

Weitere Ausgestaltungen und besonders vorteilhafte Weiterbildungen der Erfindung sind aus den Unteransprüchen, der nachfolgenden Beschreibung sowie den Figuren der Zeichnungen ersichtlich, die ein Ausführungsbeispiel der Erfindung zum Inhalt haben. Es zeigt

Fig. 1 eine Prinzipdarstellung eines Umlaufwasserheizers mit dem Temperaturregler,

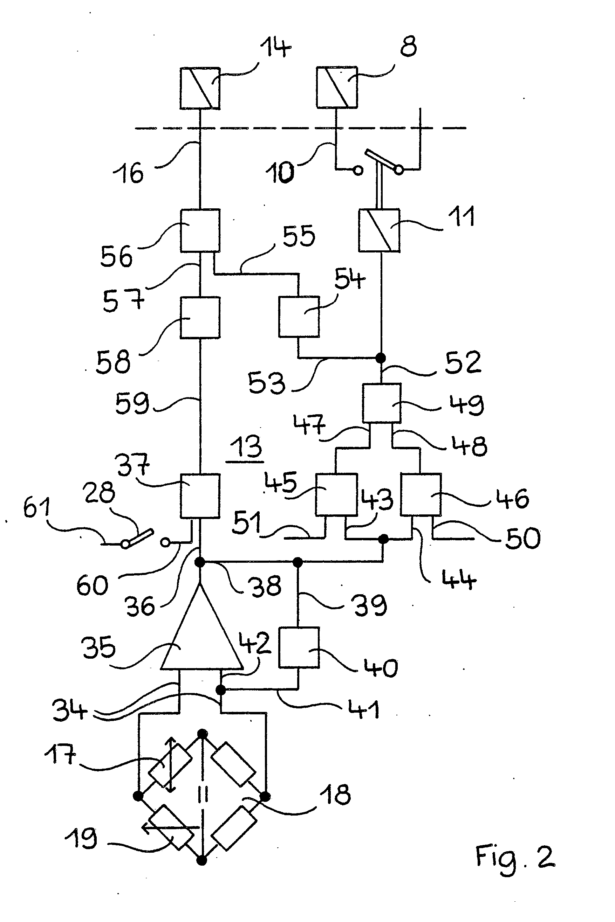

Fig. 2 ein Blockschaltbild des Aufbaus des Reglers und die

Fig. 3 und 4 Diagramme zur Erklärung der Wirkungsweise des Reglers.

In allen vier Figuren bedeuten gleiche Bezugszeichen jeweils die gleichen Einzelheiten.

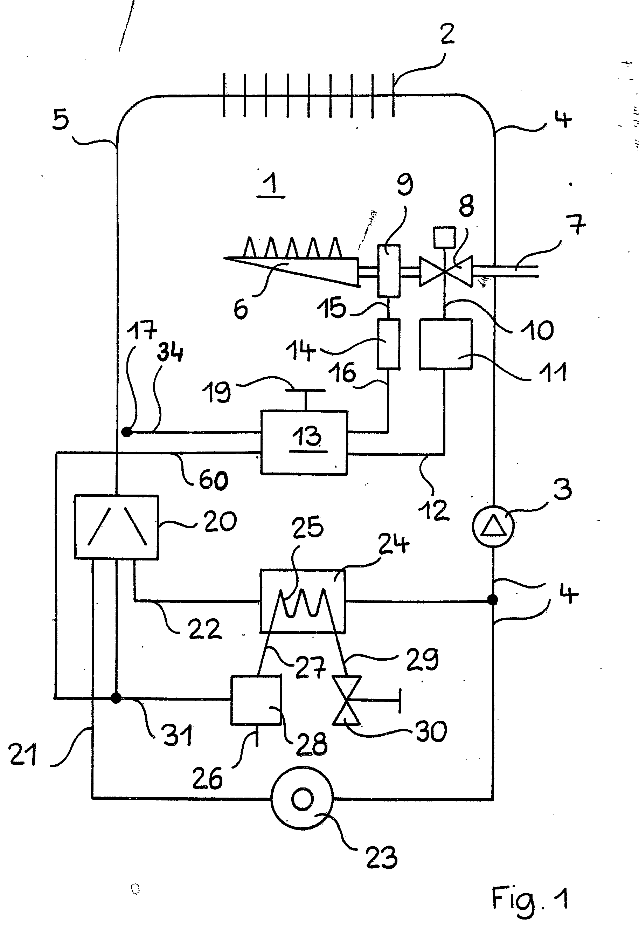

Eine Zentralheizungsanlage gemäß Fig. 1 weist einen Umlaufwasserheizer 1 auf, der beispielsweise von einem Kessel gebildet sein kann. Der Kessel besitzt einen Wärmetauscher 2, dem Umlaufwasser über eine mit einer Pumpe 3 versehene Rücklaufleitung 4 zugeführt und über eine Vorlaufleitung 5 abgeführt ist. Der Wärmetauscher 2 des Kessels wird über einen Gasbrenner 6 beheizt, der über eine Gaszufuhrleitung 7, in die ein Operator 8 und ein Druckregelventil 9 eingeschaltet sind, mit Gas versorgt wird. Der Operator 8 ist über eine elektrische Leitung 10 mit einem Relais 11 verbunden, welcher seinerseits über eine Leitung 12 mit einem Temperaturregler 13 verbunden ist. Der Druckregler 9 besitzt in seinem Inneren eine nicht dargestellte Fluidpumpe, die eine Membran des Druckreglers mit Stelldruck beaufschlagt. Diese Pumpe ist von einem Elektromotor 14 über ein Abtriebsglied angetrieben. Der Motor 14 ist elektrisch über eine Leitung 16 mit dem Temperaturregler 13 verbunden. Dem Regler wird ein Temperatur-Ist-Signal von der Vorlaufleitung 5 über einen als NTC-Widerstand ausgebildeten Temperaturfühler 17 und eine Leitung 34 zugeführt. Ein Sollwertsteller 19 dient zum Einstellen des Sollwertes des Temperaturreglers 13. Die Vorlaufleitung 5 führt zu einem Vorrang-Umschaltventil 20, das die Vorlaufleitung 5 entweder mit einer Heizzweig-Vorlaufleitung 21 oder einer Gebrauchswasserbereiter-Vorlaufleitung 22 verbinden kann. Die Heizzweig-Vorlaufleitung 21 führt zu einem Verbraucher 23, der aus einer Vielzahl in Serie oder parallel geschalteter Radiatoren und/oder einer Fußbodenheizung bestehen kann. Von dem Verbraucher 23 geht die Rücklaufleitung 4 ab. Die Gebrauchswasserbereiter-Vorlaufleitung 22 führt zu einem Gebrauchswasserbereiter 24, an den sich gleichermaßen die Rücklaufleitung 4 anschließt. Im Inneren des Gebrauchswasserbereiters 24 ist eine Rohrschlange 25 vorgesehen, die vom Fluidum der Gebrauchswasser-Vorlaufleitung 22 umströmt ist und die von einem Zapfwassernetz 26 über eine Leitung 27 gespeist ist, in der ein Wasserschalter 28 vorgesehen ist, der bei Brauchwasserzapfung geöffnet ist. Eine von der Rohrschlange 25 wegführende Leitung 29 ist von einem Zapfventil 30 beherrscht. Vom Wasserschalter 28 führt eine Betätigungsleitung 31 zum Vorrang-Umschaltventil 20, um dieses bei Wasserfluß in der Leitung 27 zu schalten, zuschalten, daß die Vorlaufleitung 5 auf die Gebrauchswasser-Vorlaufleitung 22 geschaltet wird.

Der Temperaturregler 13 geht in seinem eigentlichen Aufbau aus der Figur hervor. Der Temperaturfühler 17 liegt als NTC-Widerstand im Zuge einer Gleichspannungs-Meßbrücke 18 zusammen mit dem Sollwertgeber 19, der als von Hand verstellbarer Widerstand (Potentiometer) ausgebildet ist. Die Gleichspannungs-Meßbrükke 18 ist über Leitungen 34 mit den Eingängen eines Verstärkers 35 verbunden, von dessen Ausgang eine Leitung 36 zu einer Begrenzerschaltung 37 führt. Von der Leitung 36 zweigt eine Leitung 38 ab, die einmal zu einem Eingang 39 eines Rückführ-Netzwerkes 40 führt, dessen Ausgang über eine Leitung 41 mit einem Eingang 42 des Verstärkers 35 verbunden ist. Die Leitung 38 ist auf zwei Eingänge 43 und 44 zweier Vergleicherstufen 45 und 46 geführt, deren Ausgänge 47 und 48 Eingänge einer bistabilen Kippstufe 49 bilden.

Die zweiten Eingänge 50 und 51 der Vergleicherstufen 45 und 46 sind für einstellbare Referenzspannungen vorgesehen.

Ein Ausgang 52 der bistabilen Kippstufe 49 führt über eine Leitung 53 zu einer Verzögerungsstufe 54, deren Ausgang 55 auf einen Eingang einer als UND-Gatter ausgebildeten Endstufe 56 gegeben ist. Die als UND-Gatter ausgebildete Endstufe 56 steuert über eine Leitung 16 den Motor 4, der die nicht dargestellte Fluidpumpe des Druckreglers 9 antreibt. Ein zweiter Eingang 57 der Endstufe 56 ist mit dem Ausgang eines Choppers 58 verbunden, der seinerseits über eine Leitung 59 vom Begrenzer 37 angesteuert ist. Dem Begrenzer 37 können Signale nicht nur über die Leitung 36, sondern auch über eine Leitung 60 eingegeben werden, in der der Wasserschalter 28 im Zuge einer Leitung 61 vorgesehen ist.

Die Leitung 52 führt zum Relais 11 des Operators. Der Chopper besitzt die Funktion eines Zerhackers, der von der Netzfrequenz geführt, das ihm auf der Leitung 59 zugeführte Signal in ein Rechtecksignal verwandelt, dessen Amplitude proportional dem Eingangssignal ist.

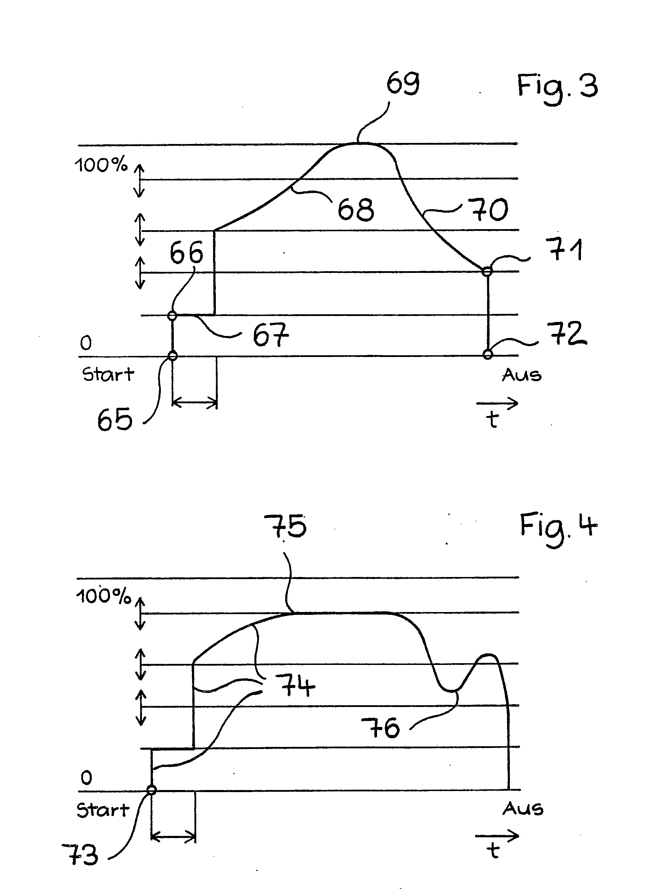

Anhand der Diagramme der Fig. 3 und 4 wird nunmehr die Wirkungsweise des Temperaturreglers 13 beschrieben:

In den Diagrammen ist in der Abszisse die Zeit t und in der Ordinate eine typische Amplitude des Ausgangssignals auf der Leitung 16 zum Motor 14 der Fluidpumpe im Druckregler 9 dargestellt. Die Kurve nach Fig. 3 entsteht bei Brauchwasserbetrieb, die Kurve nach Fig. 4 bei Heizungsbetrieb. Ausgehend vom Ruhezustand wird zum Zeitpunkt 65 ein Startimpuls gegeben, beispielsweise durch Öffnen des Zapfventils 30. Als Folge dieses Öffnens des Zapfventils resultiert ein Zapfwasserstrom im Zuge der Leitung 26, 27 und 29 mit der Folge eines Ansprechens des Wasserschalters 28 auf diesen Zapfwasserstrom. Ein Ansprechen des Wasserschalters 28 erbringt ein elektrisches Signal auf der Leitung 31 mit der Folge des Umsteuerns des Vorrang-Umschaltventils 20, indem nunmehr die Vorlaufleitung 5 auf die Gebrauchswasser-Vorlaufleitung 22 geschaltet wird und daß über die Leitung 61 dem Temperaturregler 13 ein bestimmter Sollwert im Begrenzer 37 vorgegeben wird. Dieser Sollwert ist ein fester Sollwert und bewirkt, daß die Regelabweichung, stammend aus der Gleichspannungs-Meßbrücke 18, für Brauchwasserzapfung unterdrückt wird, nachdem ein Startsignal für den Temperaturregler 13 gegeben wurde. Es wird nämlich über die Meßbrücke festgestellt, ob die Temperatur in der Vorlaufleitung 5, gemessen durch den Temperaturfühler 17, gegenüber den an den Vergleichseingängen 50 und 51 anliegenden Referenzspannungen eine Regelabweichung signalisiert, die unter der Einschaltbegrenzung liegt. Die Ausgangsspannung der Meßbrücke, die auf den Leitungen 34 ansteht, wird im Verstärker 35 verstärkt und parallel auf die Leitungen 36 und 38 gegeben. Das Signal wird über die Leitung 38 auf die Eingänge 43 und 44 der Vergleicherstufen 45 und 46 gegeben. Gleichzeitig wird das Ausgangssignal über das Rückführ-Netzwerk 40 auf den Eingang 42 zurückgeführt, um die maximale Verstärkung des Verstärkers, seinen Proportionalbereich und Integralverhalten beeinflußbar zu machen. Der Integralanteil des Rückführ-Netzwerkes 40 kann bevorzugt in Stufen, die maximale Verstärkung und der Proportionalbereich dagegen kontinuierlich verändert werden. Auf der Leitung 51 liegt eine Referenzspannung an, die einen Minimalwert darstellt, auf der Leitung 50 eine Referenzspannung, die einen Maximalwert repräsentiert. Je nachdem, ob das Gleichspannungssignal auf der Leitung 38 kleiner ist als die kleinere Referenzspannung, schaltet keiner der Vergleicher durch; wenn es größer ist als die Minimal-Referenzspannung, aber kleiner als die Maximal-Referenzspannung, schaltet der Vergleicher 45 durch, ist die Regelabweichung auf der Leitung 38 größer als die maximale Referenzspannung, schalten beide Vergleicher durch. Je nach dem Zustand wird die bistabile Kippstufe 49 beeinflußt. Gesetzt wird sie, wenn die Spannung auf der Leitung 38, von kleineren Werten kommend, größer ist als die größere Referenzspannung am Eingang 50 (Startsignalbegrenzung). Im anderen Fall bleibt die Kippstufe 49 nicht gesetzt. Das Ausgangssignal auf der Leitung 52 betätigt bei gesetzter Kippstufe das Stellglied 11, so daß der Operator in Tätigkeit geht. Ein Aktivieren des Operators 8 führt zu einem relativ kleinen Gasdurchsatz in der Leitung 7 zum Brenner 6, der dem Überzünd-Gasstrom entspricht. Der entsprechende Wert ist durch den Kurvenzug 66 in Fig. 3 dargestellt.

Hieraus folgt, daß unmittelbar nach dem Start, d. h. dem Ansprechen des Wasserschalters 28, bei ausreichender Regelabweichung (Istwert der Vorlauftemperatur gegenüber eingestelltem Sollwert 19) der Überzündgasstrom zum Brenner geleitet wird. Das Ausgangssignal bei gesetzter Kippstufe 49 erscheint aber über die Leitung 53 an der Verzögerungsstufe 54, die das Signal nach der einstellbaren Verzögerungszeit, gegeben durch den Kurvenzug 67, weitergibt. Das bedeutet, daß der Überzündgasstrom nur während einer bestimmten Zeitspanne, entsprechend der Länge des Kurvenzugs 67, anliegt. Nach Ablauf der Verzögerungszeit steht das entsprechende Signal über die Leitung 55 an der Endstufe 56 an. Da der konstante Sollwert über den Begrenzer 37 und den Chopper 58 über die Leitung 57 gleichfalls an der Endstufe 56 ansteht, wird über die Leitung 16 nunmehr der Motor 14 der Fluidpumpe im Druckregler mit einer Spannung beaufschlagt, die dem maximalen Sollwert, d. h. der größten Regelabweichung, entspricht. Der entsprechende Kurvenzug 68 zeigt ein Ansteigen des Gasdurchsatzes bis auf einen Wert entsprechend 100% im Punkt 69 bei steigendem Zapfwasserstrom.

Nach Drosseln des Zapfventils 30 wird die Regelabweichung kleiner, es fällt der Gasdurchsatz entsprechend der Kurve 70 auf einen Minimallastpunkt 71 ab. Der Minimallastpunkt 71 ist dadurch gegeben, daß die minimale Referenzspannung auf der Leitung 51 von dem auf der Leitung 38 verstärkten Regelabweichung unterschritten wird, so daß die Vergleicherstufe 45 sperrt und die Kippstufe 49 zurückgesetzt wird. Die Folge davon ist ein Sperren des Operators 8, so daß der Gasdurchsatz auf den Nullwert zurückgeht, entsprechend dem Punkt 72.

Die Arbeitsweise des Reglers bei Heizungsbetrieb verdeutlicht Fig. 4. Bei Ergehen eines Startimpulses zur Zeit $t_0$, entsprechend dem Punkt 73 der Kurve 74, liegt eine ausreichend große Regelabweichung der Istvorlauftemperatur zum eingestellten Sollwert vor, die von der Meßbrücke 18 abgefühlt wird. Die Regelabweichung in Form der am Ausgang des Verstärkers 35 abgegebenen Spannung hat die größere Referenzspannung auf dem Eingang 50 überschritten, es schaltet nunmehr auch der Vergleicher 46, wie bei der Brauchwasserbereitung beschrieben, durch, so daß die Kippstufe 49 gesetzt wird, als dessen Folge der Operator 8 seine Arbeit aufnimmt. Das entsprechende Signal wird, über die Verzögerungsstufe 54 verzögert, auf die Endstufe 56 gegeben. Der Begrenzer 37 arbeitet nunmehr bei geschlossenem Schalter 28 gegen den damit vorgegebenen Wert. Die Regelabweichung wird über die Leitung 36 auf den Chopper 58 gegeben, und mit der Größe der Regelabweichung wird über die Endstufe 56 der Motor 14 mit einem Signal angesteuert, das als Stellgröße der Regelabweichung entspricht. Je nach Vorgabe des P-Bereiches, des Verstärkungsfaktors und des Integralverhaltens des Rückführungs-Netzwerkes 40 ist der auf der Leitung 16 erscheinende Stellwert entsprechend der Regelabweichung. Liegt die Regelabweichung über der durch den Begrenzer 37 vorgegebenen Grenze, so ergibt sich als Stellgröße das Kurvenstück 75. Das Maximum des Kurvenstücks 75 ist durch den Begrenzer 37 bei Heizungsbetrieb gegeben. Da die Stellgröße als Gasdurchsatz gemäß der Kurve 75 der Regelabweichung folgt, kann es in der Stellgröße zu Minima, beispielsweise im Punkt 76, kommen. In dem Moment, in dem die Stellgröße die Minimalbegrenzung, entsprechend der kleineren Referenzspannung auf dem Eingang 51 des Vergleichers 45, unterschreitet, wird die Kippstufe 49 zurückgesetzt, wobei sowohl das Relais 11 auch der Motor 14 stromlos werden und die Stellgröße auf den Wert Null zurückgeht. Überschreitet die Regelabweichung wieder einen bestimmten Wert, so beginnt ein erneutes Regelspiel in einem neuen Punkt 73 zu späterer Zeit.

**Patentansprüche**

1. Temperaturregler (13) für eine brennstoffbeheizte Wärmequelle (6) mit einem Druckregler (9) für einen gasförmigen Brennstoff und mit einer Gleichspannungs-Meßbrücke (18), in der ein Istwertgeber (17) und ein Sollwertgeber-Widerstand (19) vorgesehen ist und mit deren Signalen ein Stellglied (14) im Gasweg (7) der Wärmequelle (6) beaufschlagt ist, dadurch gekennzeichnet, daß die Regelabweichung als elektrisches Signal parallel über einen Chopper (58) und über einen Vergleicher (45, 46) einmal auf ein Verzögerungsglied (54) und zum anderen auf einen Operator (11, 8) gegeben ist und daß das Verzögerungsglied (54) zusammen mit dem Ausgang des Choppers (58) das Stellglied (14) über eine Endstufe (56) ansteuert.

2. Temperaturregler nach Anspruch 1, dadurch gekennzeichnet, daß der Vergleicher (45, 46) als Zweifachvergleicher mit unterschiedlichen Referenzeingängen (51, 50) ausgestaltet ist.

3. Temperaturregler nach Anspruch 1 oder 2, dadurch gekennzeichnet, daß der Vergleicher (45, 46) einen einzigen Vergleicher mit einstellbarer Hysterese und einstellbarem Schaltpunkt aufweist.

4. Temperaturregler nach einem der Ansprüche 1 bis 3, dadurch gekennzeichnet, daß die Endstufe (56) als UND-Gatter ausgebildet ist.

5. Temperaturregler nach einem der Ansprüche 1 bis 4, dadurch gekennzeichnet, daß die Regelabweichung über einen Begrenzer (37) auf den Chopper (58) gegeben ist.

**Claims**

1. A temperature controller (13) for a fuelburning heat source (6) comprising a pressure controller (9) for gaseous fuel and a d.c. voltage-measuring bridge (18), which includes an actual-value signal generator (17) and a desired-value signal-generating resistor (19) and delivers signals to a final control element (14) in the gas flow path (7) of the heat source (6), characterized in that the actuating signal is delivered as an electrical signal in parallel via a chopper (58) and a comparator (45, 46) to a delay line (54) and an operator (11, 8) and that the delay line (54) together with the output of the chopper (58) controls the final control element (14) via an output stage (56).

2. A temperature controller according to claim 1, characterized in that the comparator (45, 46) consists of characterized in that the comparator (45, 46) consists of a dual comparator having different reference inputs (51, 50).

3. A temperature controller according to claim 1 or 2, characterized in that the comparator (45, 46) comprises a single comparator, which has an adjustable hysteresis and an adjustable break-over point.

4. A temperature controller according to any of claims 1 to 3, characterized in that the output stage (56) consists of an AND gate.

5. A temperature controller according to any of claims 1 to 4, characterized in that the actuating signal is delivered to the chopper (58) by a limiter (37).

**Revendications**

1. Régulateur de température (13) pour une source de chaleur (6) marchant aux combustibles avec un régulateur de pression (9) pour un combustible gazeux, et avec un pont de mesure à tension constante (18), comprenant un organe de mesure (17) et une résistance potentiométrique (19) dont les signaux agissent sur un organe de réglage (14) disposé dans la conduite d'alimentation en gaz (7) de la source de chaleur (6), caractérisé par le fait que l'écart sous forme d'un signal électrique est appliqué en parallèle, par l'intermédiaire d'un chopper (58) et d'un comparateur (45, 46), d'une part à un organe de temporisation (54) et d'autre part à un opérateur (11, 8), et que l'organe de temporisation (54) en combinaison avec la sortie du chopper (58) agit sur l'organe de réglage (14) par l'intermédiaire d'un étage final (56).

2. Régulateur de température selon la revendication 1, caractérisé par le fait que le comparateur (45, 46) est à double action et comporte des entrées de référence différentes (51, 50).

3. Régulateur de température selon la revendication 1 ou 2, caractérisé par le fait que le comparateur (45, 46) comporte un seul comparateur avec hystérésis et point de commutation réglables.

4. Régulateur de température selon l'une des revendications 1 à 3, caractérisé par le fait que l'étage final (56) est conçu comme grille ET.

5. Régulateur de température selon l'une des revendications 1 à 4, caractérisé par le fait que l'écart est appliqué au chopper (58) par l'intermédiaire d'un limiteur (37).

Fig. 1

Fig. 2

Fig. 3

Fig. 4